# EUROPEAN PATENT APPLICATION

(11) **EP 2 874 096 A1**
(43) Date of publication of application: **20.05.2015**
(21) Application number: 13306547.4
(22) Date of filing: 13.11.2013
(51) Int. Cl.: G06K 7/12, G06K 19/06

(54) **Object detection system**

(71) Applicant: ALCATEL LUCENT, 92100 Boulogne-Billancourt (FR)
(72) Inventor: Liekens, Werner, 2018 Antwerpen (BE); De Loof, Jourik, 2018 Antwerpen (BE)
(74) Representative: Philippaerts, Yannick

(57) **Abstract**

Object detection system comprising at least one camera that is directed towards at least one object, wherein the at least one object comprises an identification code provided in an invisible ink which is detectable in a predetermined wavelength spectrum outside the visible spectrum, whereby said camera is provided with a filter to extract said predetermined wavelength spectrum, the object detection system further comprising a processor adapted for recognizing said identification code such that said at least one object is identifiable by the system via said recognized code.

## Description

### Technical Field

The present invention relates to an object detection system. Particularly, the invention relates to visual object recognition systems.

### Background

Visual object recognition, whereby an object is recognized and identified via a camera, is extremely difficult. The core problem is that each object can cast an infinite number of different 2D images by varying the object's position, pose, lighting, and background relative to the camera. Due to this problem, visual object recognition and identification is in practice not very reliably, since it depends too much on the before mentioned parameters. Furthermore, significant computing power is needed to process the images in an attempt to recognize and identify objects present in the image.

It is a goal of the present invention to provide an object detection system that is reliable and that requires less computational power than existing recognition systems.

### Summary

To this end, the object detection system of the invention comprises at least one camera that is directed towards at least one object, wherein the at least one object comprises an identification code provided in an invisible ink, which is detectable in a predetermined wave length spectrum outside the visible spectrum, whereby said camera is provided with a filter to extract the predetermined wavelength spectrum, the object detection system further comprising a processor adapted for recognizing the identification code such that the at least one object is identifiable by the system via the recognized code.

The invention proposes to provide an identification code to the object. This identification code can be recognized by the camera such that the object can be identified. Thus, instead of analyzing object contours/textures/shapes and other visual object characteristics, the object according to the invention can be recognized by a simple read-out of the identification code. Thereby, the identification code is provided in an invisible ink. In this manner, the identification code is not visible for a person, and thereby a conventional visual appearance of the object is maintained. In other words, the identification code provided to the object does not negatively affect the object's appearance, since it is not visible to a person. The camera is provided with a filter to extract the predetermined spectrum wherein the code is visible, such that the camera can see the identification code, and process the latter to recognize the code and thereby identify the object. According to the invention, the interaction between the digital world and the real world is significantly simplified. Where a conventional camera and processor together require a significantly high processing effort to recognize objects, wherein the reliability of object recognition is only average, the object detection system of the invention allows to recognize objects requiring only a minimum of processing effort, and whereby object recognition is highly reliably.

Preferably, the invisible ink is a fluorescent ink which shifts a spectrum with respect to an excitation source, wherein the spectrum is shifted to the predetermined wavelength spectrum. Thereby, the excitation source can excite a spectrum from within the visible spectrum towards a spectrum outside the visible spectrum. Furthermore, the excitation source (or light source) does not in first instance need to be a separate apparatus, or part of an apparatus. The excitation source can also be the environmental light. Different materials exhibit different fluorescent properties. A material might absorb ultraviolet light and emit visible light, or absorb visible and emit infrared, or absorb mere infrared and emit far infrared. Thereby, materials can upconvert or downconvert the spectrum.

Preferably, the invisible ink is a fluoresent ink, which downconverts visible light to infrared light. Such ink is also known as IR ink. Such ink is available on the market, and is known to be suitable for camera detection.

Preferably, the object detection system further comprises a database wherein the recognized code is stored in relation to the functionality of the corresponding object. With the database being part of the object detection system, when an identification code is recognized, the processor can retrieve via the database the functionality of the corresponding object. This would allow for example robots provided with the object detection system of the invention, to use the recognized object in a correct manner (in line with the retrieved functionality). This further facilitates the interaction between digital systems and the real world.

Preferably, each object is provided with multiple identification codes at different sides of the object. Providing multiple codes at different sides of the object will not adversely affect the visual appearance of the object, since the ink that is used to provide the code is invisible. However, it will facilitate the recognition of the object, as it will allow the object to be positioned more randomly.

Preferably, the identification code is a barcode, preferably a 2D barcode. Barcodes are known to contain certain information, and are designed such that they can be easily recognized via a camera. An example of a 2D barcode that is suitable for use in the invention is a QR-code.

Preferably, the camera is a hyperspectral camera. Hyperspectral cameras are designed to see beyond the visible spectrum. Therefore, these cameras will be particularly suited to recognize identification codes provided in invisible ink which is detectable in a predetermined wavelength spectrum outside the visible spectrum.

Preferably, the object detection system further comprises a light source provided for emitting light in a further predetermined spectrum. Thereby, the further predetermined spectrum is chosen such that it interacts with the invisible ink to show the identification code in the predetermined wavelength spectrum. For example, when the ink is fluorescent ink, which downconverts visible light to infrared light, the light source is provided to emit visible light.

Preferably, the at least one object is a manmade object. Manmade objects are objects that are created, directly, or indirectly, by a person. Examples of such objects are a chair, a table, a knife, a cup, and other physical objects. It will be clear that an object that is created via a machine, for example a moulded plastic object, is still considered a manmade object. Manmade objects can come in different forms and shapes, and are therefore hard to recognize via a camera solely based on their form and shape. Therefore, adding the identification code as is suggested by the invention, significantly facilitates recognition of such manmade objects.

The invention further provides a method for identifying an object, the method comprising:
- creating an identification code that corresponds to the object;
- providing the identification code to the object using an invisible ink, which is detectable in a predetermined wavelength spectrum outside the visible spectrum;
- directing a camera towards the object;
- filtering an image from the camera to extract the predetermined wavelength spectrum;
- recognizing the identification code in the filtered image.

The method for identifying an object according to the invention comprises the same or at least similar technical characteristics than the object detection system that is described above. Therefore, technical effects apply to the object detection system, and which are explained above, equally apply for the method for identifying an object.

The invention further relates to a camera provided with a filter to extract the predetermined wavelength that corresponds to a predetermined invisible ink, which is detectable in the predetermined wavelength spectrum outside the visible spectrum, wherein the camera comprises a processor provided to recognize an identification code provided with the invisible ink to an object. Via the camera according to the invention, an object having an identification code applied thereto in an invisible ink which is detectable in the predetermined wavelength spectrum, can be recognized. Such cameras will significantly facilitate the interaction between the digital world and the real world. For example for robots, recognition of objects in the world around them (provided that these objects have an identification code) is significantly facilitated, and therefore image processing means can be simplified.

The invention further relates to an object provided with an identification code in an invisible ink which is detectable in a predetermined wavelength spectrum outside the visible spectrum, by a camera having a filter to extract the predetermined wavelength spectrum. Such objects are easily recognisable via the system and camera and method of the invention.

The object of the invention is preferably a manmade object having an outer surface, wherein multiple of the identification codes are provided to the outer surface in the invisible ink. By providing multiple identification codes to different outer surfaces, the object can be recognized from different points of view. This further facilitates recognition of the object.

### Brief description of the figures

Some embodiments of apparatus and/or methods in accordance with embodiments of the present invention are now described, by way of example only, and with reference to the accompanying drawings, in which:
figure 1 shows a manmade object and an identification code; and
figure 2 shows a system according to an embodiment of the invention.

### Detailed description of embodiments

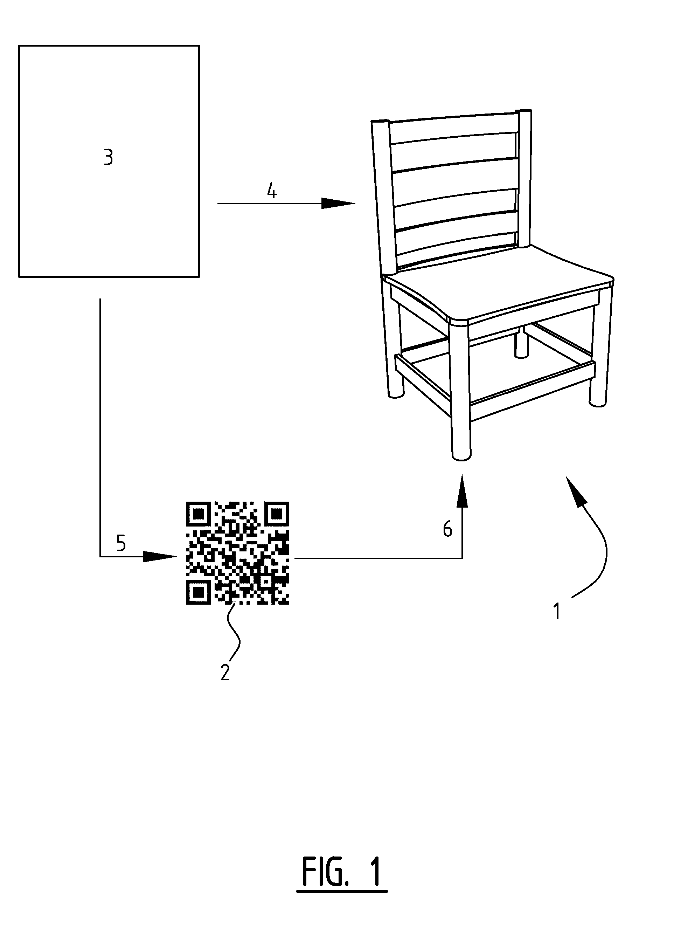

Figure 1 shows a man-made object 1. Thereby, man-made object is defined as an object that is directly or indirectly designed and created by man. The example of figure 1 shows a chair 1. Figure 1 further illustrates a factory 3 where the man-made object 1 is produced 4. Parallel to the producing 4 of the man-made object 1, an identification code 2 is determined 5. Determination 5 of identification codes 2 can be done at the factory 3, or can be done externally. When an identification code 2 is determined, it is applied 6 to the man-made object 1.

During application 6 of the identification code 2 to the object 1, at least one outer surface of the man-made object is provided with the identification code. Preferably, multiple distinct outer surfaces of the man-made object are provided with the identification code 2. Thereby, in the example of the chair, an identification code can be applied to the seat of the chair, to the back of the chair and to at least one leg of the chair. Thereby, the applied identification codes 2 to seat, back and leg can be identical, or can specify the location of the chair to which the identification code is applied. The identification code 2 of figure 1 contains only the information: "this is a chair". However, a code can be formed that contains the information: "this is a seat of a chair", which code can then be applied to the seat of the chair.

The identification code 2 is preferably a barcode, more preferably a 2D barcode. The advantage of using barcodes as identification code is that the algorithms to read such codes are well known, that these codes are error proof, and that various types of information can be contained by the codes. An example of a 2D barcode that is particularly suitable for use as identification code in the invention is a QR code (quick response code). The QR code typically comprises black modules (square dots) arranged in a square pattern on a white background. The information encoded may be made up of four standardized kinds of data (numeric, alphanumeric, bite/binary, kanji) or through supported extensions, virtually any kind of data. For the invention, the 'black modules' are 'dots of ink' (described hereunder) where the white background is 'not provided with ink'. The identification code 2 preferably comprises object identification data, and optionally further comprises object characteristics such as weight, use-related features, etc.

The identification code 2 is provided to the object 1 using an invisible ink. Thereby, invisible is defined as not visible within the approximate wavelength range of 420 to 680 nm. More preferably in the range of 380 to 800 nm. Furthermore, invisible is defined as not recognizable by a human eye. More preferably it is not recognizable by a human eye of a middle-aged man or woman that has a normal (average) eye condition. Invisible inks are known in the market. An example is the IRDC2 ink of Maxmax which is a 'visible to infrared' fluorescent powder. When stimulated with visible light (blue or red light), the powder will fluoresce in the infrared range. Thereby, this ink downconverts the excitation source spectrum to a infrared spectrum (the infrared spectrum is not visible). Thereby, this ink is visible in the infrared spectrum, and is not visible in the visible spectrum. When the ink has a number of different elements in it, wherein the different elements each excite an incoming spectrum towards a predetermined spectrum, then the ink could be detected via a combination of predetermined wavelength spectra. Therefore, in the invention, the term 'predetermined wavelength spectrum' could relate to a single predetermined wavelength spectrum or to a combination of multiple predetermined wavelength spectra. It will be clear that the present invention is not related to invisible inks, but merely uses the invisible inks available on the market in a new manner. The skilled person will recognize that applying a code to a surface using the invisible ink can be executed in different manners, for example via screen printing.

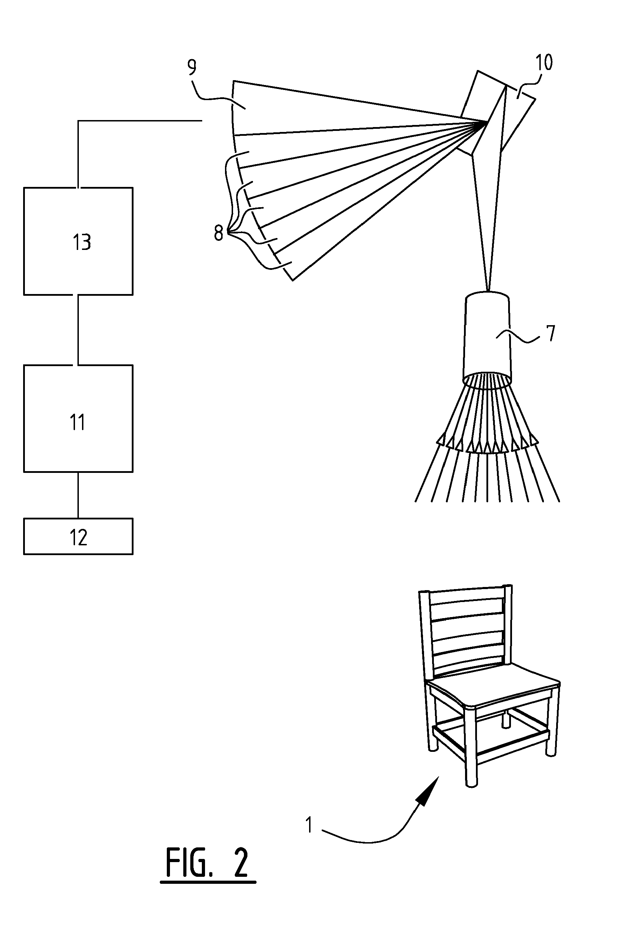

Figure 2 shows an object detection system according to the invention wherein an object 1 is identifiable via the system. The object 1 comprises identification codes in invisible ink. A camera 7 is provided to capture an image of the object, the captured image can be defracted 10 to retrieve an image in the visible spectrum 8 and in a spectrum that lies outside of the visible spectrum (invisible spectrum 9). The ink that is used to apply the identification code, is typically known to be visible in a predetermined spectrum. This predetermined spectrum is filtered via defraction 10, and an image is extracted in this predetermined spectrum 9. This spectrum is processed in processor 13 using common image processing techniques to recognize the identification codes in the image. These identification codes allow to identify 11 the object. Thereby, the identification can be directly or indirectly via the code. Direct identification means that the code itself comprises the identification information. Indirect identification means that the recognized code is compared to codes stored in a reference database (not shown), where the code is stored in relation to the identification information. Via this system, the camera 7 can identify the object 1 as a chair 12 without significantly complex processing steps.

The camera 7 is preferably a hyperspectral camera. Hyperspectral cameras are frequently used in different industries, for example for finding new oil fields (via a spectral signature for oil). Thereby, it is known in hyperspectral imaging to divide the images into multiple spectrum bands which can be individually processed. In the invention, the ink is known to be visible in a predetermined spectrum, and therefore the camera preferably comprises a filter to extract this predetermined spectrum, so that the identification code is visible via the camera.

The camera 7 is preferably provided with a light source to illuminate the object 1. Thereby the light source is preferably chosen to excite the wavelength spectrum that is downconverted by the invisible ink. In this manner, code recognition is optimized.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Object detection system comprising at least one camera that is provided to be directed towards at least one object, wherein the at least one object comprises an identification code provided in an invisible ink which is detectable in a predetermined wavelength spectrum outside the visible spectrum, whereby said camera is provided with a filter to extract said predetermined wavelength spectrum, the object detection system further comprising a processor adapted for recognizing said identification code such that said at least one object is identifiable by the system via said recognized code.

2. Object detection system according to claim 1, further comprising a database wherein recognized code is stored in relation to the functionality of the corresponding object.

3. Object detection system according to any one of the previous claims, wherein the identification code is a barcode, preferably a 2D-barcode.

4. Object detection system according to any one of the previous claims, wherein at least one camera is at least one hyperspectral camera.

5. Object detection system according to any one of the previous claims, further comprising a light source provided for emitting light in a further predetermined spectrum.

6. Object detection system according to any one of the previous claims, wherein said at least one object is at least one manmade object.

7. Method for identifying an object, the method comprising:
- creating an identification code that corresponds to the object;
- providing said identification code to said object using an invisible ink, which is detectable in a predetermined wavelength spectrum outside the visible spectrum;
- directing a camera towards said object;
- filtering an image from said camera to extract said predetermined wavelength spectrum;
- recognizing said identification code in said filtered image.

8. Camera provided with a filter to extract a predetermined wavelength that corresponds to a predetermined invisible ink which is detectable in the predetermined wavelength spectrum outside the visible spectrum, wherein the camera comprises a processor provided to recognize an identification code provided with said invisible ink to an object.

9. Object provided with an identification code in an invisible ink which is detectable, in a predetermined wavelength spectrum outside the visible spectrum, by a camera having a filter to extract said predetermined wavelength spectrum.

10. Object of claim 9, being a manmade object having an outer surface, wherein multiple of said identification codes are provided to said outer surface in said invisible ink.

11. Object according to claim 9 or 10, wherein the invisible ink is a fluorescing ink which shifts a spectrum with respect to an excitation source, wherein the spectrum is shifted outside the visible spectrum to said predetermined wavelength spectrum.

12. Object according to any one of the claims 9-11, wherein the invisible ink is a fluorescing ink which down-converts visible light to infrared light.

13. Object according to any one of the claims 9-12, wherein the object is provided with multiple identification codes at distinct outer surfaces of the object.

14. Robot comprising a camera according to claim 8.
